Europäisches Patentamt

(19) European Patent Office

Office européen des brevets

(11) Numéro de publication: **0 010 042**
**B1**

(12) **FASCICULE DE BREVET EUROPEEN**

(45) Date de publication du fascicule de brevet: **30.12.81**

(51) Int. Cl.³: **A 01 K 1/00, E 06 B 11/02**

(21) Numéro de dépôt: **79400698.1**

(22) Date de dépôt: **02.10.79**

(54) Ossature de paroi avec ouverture et porte pour box préfabriqué pour cheval.

(30) Priorité: **05.10.78 FR 7828470**

(43) Date de publication de la demande:
**16.04.80 Bulletin 80/8**

(45) Mention de la délivrance du brevet:
**30.12.81 Bulletin 81/52**

(84) Etats Contractants désignés:
**BE CH DE GB LU**

(56) Documents cités:
**DE - A - 2 111 383**
**FR - A - 2 392 190**
**US - A - 1 765 651**
**US - A - 2 281 220**
**US - A - 3 699 924**
**US - A - 3 802 393**

(73) Titulaire: **Choisel, Daniel Paul Léon**
**2, rue de la Muette Les Bas Buissons**
**F-28100 Dreux (Eure-et-Loir) (FR)**

(72) Inventeur: **Choisel, Daniel Paul Léon**
**2, rue de la Muette Les Bas Buissons**
**F-28100 Dreux (Eure-et-Loir) (FR)**

(74) Mandataire: **Chevallier, Robert et al,**
**Cabinet BOETTCHER 23, rue La Boétie**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Ossature de paroi avec ouverture et porte pour box préfabriqué pour cheval

L'invention a pour objet une ossature de paroi avec au moins une ouverture de passage obturable par une porte pour stalle ou box de chevaux ou constructions analogues. Cette ouverture est limitée par deux poteaux verticaux tubulaires à profil carré et par une traverse supérieure qui s'étend entre ces poteaux. Des trous sont percés dans les parties extrêmes des poteaux pour leur fixation à des moyens d'ancrage au sol et pour la fixation de la traverse supérieure. Une première et une seconde paroi sont fixées respectivement à ces poteaux à l'aide d'équerres vissées à ces derniers.

On connâit déjà des parois préfabriqué es pour stalle ou box de cheval. Par exemple, dans le brevet français N° 2.185.140 on a décrit des cloisons préfabriquées qui sont agencées par deux, l'une dite longitudinale, l'autre dite transversale. Dans la cloison dite longitudinale est prévue une ouverture de passage limitée latéralement par deux poteaux espacés; en outre, un longeron supérieur qui termine la cloison à son sommet se prolonge entre les poteaux cú elle joue le rôle d'une traverse de liaison. Cette disposition est classique. Elle comporte l'inconvénient que les poteaux limitant le passage sont incorporés au panneau et que, par conséquent, le plan du passage et le plan du panneau sont toujours confondus.

On sait aussi qu'il est possible de dissocier le panneau et les poteaux réunis à leur sommet par une traverse, c'est-à-dire de fabriquer séparément ces deux ensembles et de fixer ensuite les panneaux aux poteaux, à l'aide d'équerres par exemple. De cette façon, le plan de l'ouverture et celui des panneaux peuvent être des plans verticaux différents faisant entre eux un angle, comme on peut le voir décrit dans le brevet français N° 2.392.190. Dans un tel cas, ainsi qu'il est prévu dans ce même brevet, on obtient une rigidité suffisante de l'ensemble en ancrant fortement les poteaux dans le sol.

Or, la realisation d'ancrages importants est parfois difficile et coûteuse.

L'état de la technique est illustré plus exactement encore par le brevet américain N° 3.699.924 dans lequel des parois de stalle pour chevaux comprennent des poteaux verticaux tubulaires à profil carré. Des profilés horizontaux sont fixés aux extrémités de ces poteaux, grâce á des éléments qui s'introduisent dans ces derniers et dont les profilés sont munis. Des trous transversaux sont percés à la fois à travers les poteaux et à travers les éléments, introduits dedans et des boulons sont montés dans ces trous. Selon ce brevet, les éléments sont eux-mêmes des tronçons tubulaires à profil carrè qui s'ajustent dans les poteaux, de sorte que les trous percés dans ces derniers ne peuvent servir qu'à des boulons qui les traversent totalement. Par ailleurs, dans ce brevet les portes sont mises en place grâce à des trous spècialement prévus pour la fixation de charniéres en divers points de la hauteur du poteau intéressé.

Le but principal de l'invention est d'apporter une ossature de paroi avec ouverture de passage et porte de fermeture grâce à laquelle les panneaux et les poteaux limitant le passage ne sont pas incorporés ensemble dès leur fabrication et grâce à laquelle aussi on obtient une rigidité suffisante de la paroi installée avec un ancrage léger des poteaux dans le sol, cette ossature étant conçue pour permettre le montage sur place d'une porte de l'un quelconque des deux types coulissant ou battant sans transformation préalable des poteaux et des panneaux préfabriqués en usine.

L'invention vise aussi à apporter une ossature de paroi avec ouverture de passage obturable par une porte d'un type quelconque coulissant ou battant, avec laquelle, quand il s'agit d'une porte battante, on peut, sans difficulté et sans transformation préalable des poteaux et des panneaux préfabriqués en usines, monter sur place la porte battante d'un côté quelconque droit ou gauche, en choisissant un sens quelconque d'ouverture vers l'extérieur ou vers l'intérieur.

On atteint les résultats recherchés par l'invention avec une ossature de paroi ayant une ouverture de passage obturable par une porte, comprenant un premier poteau et un second poteau tubulaire à profil carré, espacés limitant le passage, servant chacun à la fixation d'un panneau, et comprenant aussi une traverse qui se prolonge au-delà de l'un quelconque des deux poteaux sur une distance sensiblement égale à la distance qui sépare les deux poteaux. Selon l'invention, l'extrémité libre de cette traverse est fermement réunie à la zone supérieure de la partie de paroi associée au poteau au-delà duquel la traverse est prolongée. Cette traverse est pourvue de plaquettes se tranversant et s'introduisant dans les poteaux dans le sens des diagonales de la section droite carrée de ces derniers, cependant que des trous percés dans les quatre faces des parties extrêmes des poteaux sont munis de manchons taraudés dans lesquels on peut visser des vis pour immobiliser les plaquettes.

Avec une telle ossature de paroi, la traverse prolongée constitue un support de fixation d'un rail disposé parallélement à cette traverse et servant à supporter et à guider une porte coulissante. La porte comprend des montants de type tubulaire creux à section droite carrée identiques aux poteaux d'encadrement, les deux parties extrêmes opposées de ces montants présentant des trous percés à travers leurs quatre faces et munis de manchons taraudés.

Quand il s'agit d'une porte coulissante, celle-ci est pourvue sur sa tranche inférieure d'un profilé en U à ouverture dirigée vers le sol, en position d'utilisation, ce profilé étant tenu en place à ses extrémités grâce à des éléments carrés introduits et fixés dans les extrémités des montants tubulaires creux de cette porte, les faces de ces éléments présentant des trous percés identiques aux trous des poteaux.

Quand il s'agit d'une porte battante, les gonds de cette porte comprennent une piéce composée d'un élément carré à faces percées de trous apte à être introduite et fixé dans les extrémités des montants tubulaires creux de la porte et d'une plaque, ayant un trou destiné à coopérer avec un pivot, solidement fixé à l'élément carré dans une position à 45°.

Pour mieux faire comprendre l'invention et ses avantages, on donnera maintenant une description d'un exemple de réalisation; on se reportera aux dessins annexés dans lesquels:

la figure 1 est une vue en élévation d'une ossature conforme à l'invention,

la figure 2 est une vue en coupe selon II—II de la figure 1,

la figure 3 est une vue de détail montrant un profilé pour le guidage de la partie inférieure de la porte coulissante de la figure 2,

la figure 4 est une vue agrandie de détail montrant la fixation des gonds d'une porte battante sur l'ossature de l'invention,

la figure 5 est une vue de dessus d'une pièce pour le montage pivotant d'une porte battante sur l'ossature de l'invention.

la figure 6 est une vue de détail en coupe selon VI—VI de la figure 1.

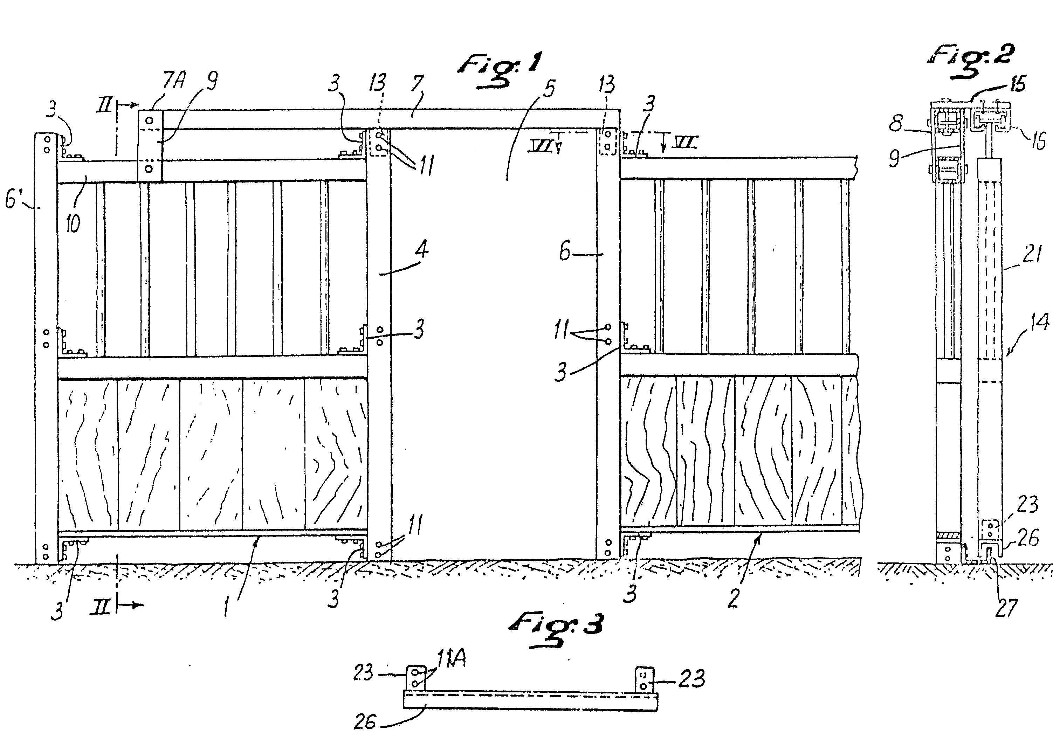

On a représenté sur la figure 1 une première partie 1 d'une paroi d'un box pour cheval, ou d'une enceinte fermée analogue susceptible d'avoir un autre usage, et une seconde partie 2 d'une paroi. Cette seconde partie de paroi 2 peut servir à prolonger la premiére partie 1 pour limiter avec elle une seule enceinte; elle peut aussi prolonger la premiére partie 1 en servant à limiter une seconde enceinte qui fait suite à une première enceinte, comme dans le présent exemple.

Les parties 1 et 2 de paroi sont identiques, préfabriquées en atelier et fixées sur place grâce à des poteaux auxquels elles sont réunies grâce à des moyens appropriés, par exemple grâce à des équerres 3.

Pour pénétrer dans le box ou dans l'enceinte, il est prevu une ouverture de passage pouvant être obturée par une porte. Un premier poteau 4 sert de moyen d'encadrement de l'ouverture de passage 5 et à la fixation d'une extrémité de la première partie de paroi 1. Un second poteau 6 est espacé du premier poteau 4 de la distance choisie pour la largeur du passage 5. Ce second poteau 6 sert aussi de moyen d'encadrement de l'ouverture de passage 5 et il sert, en outre, à la fixation d'une extrémité de la seconde partie de paroï 2. Les deux autres extrémités opposées des parties de paroi 1, 2 sont fixées à l'aide d'equerres 3 à d'autres poteaux dont un seul désigné par la référence 6' est visible sur la gauche de la figure 1. On peut répéter sur une grande longueur le dessin de la figure 1. On a ainsi la représentation d'une face d'une succession de boxes; chaque box individuel a alors comme paroi, sur cette face, celle qui est définie par la partie de paroi 1, l'ouverture 5 limitée par les poteaux 4 et 6, la porte (non représentée sur la figure 1) qui sert à fermer l'ouverture 5.

Si l'on désire, ainsi qu'il est souhaitable, pouvoir se contenter d'ancrer les poteaux, 4, 6 dans le sol d'une façon aussi limitée que possible, il faut donner à chaque paroi de boxe individuel définie ci-dessus une rigidité élevée. On y parvient, selon l'invention, grâce à une ossature de paroi composée de la première partie 1 de paroi, des poteaux 4, 6 et d'une traverse supérieure 7 qui s'étend entre les sommets du premier poteau 4 et du second poteau 6, et qui se prolonge au-delà du poteau 4 sur une distance qui est au moins égale ou faiblement supérieure à la distance qui sépare les deux poteaux 4, 6. Inversement, si l'on considérait que la paroi d'un box individuel se compose des poteaux 4, 6 et de la seconde partie de paroi 2, la traverse 7 s'étendrait au-delà du poteau 6.

L'extrémité libre 7A de la traverse prolongée 7 est fermement réunie à la zone supérieure de la partie de paroi 1 associée au poteau 4 audelà duquel elle se prolonge. Deux plaques paralléles 8, 9 sont solidement boulonnées d'une part sur l'extrémité 7A, d'autre part sur un élément, par exemple un profilé supérieur 10, de la partie de paroi 1. Ainsi l'extrémité 7A et le profilé 10 sont fermement réunis l'un à l'autre.

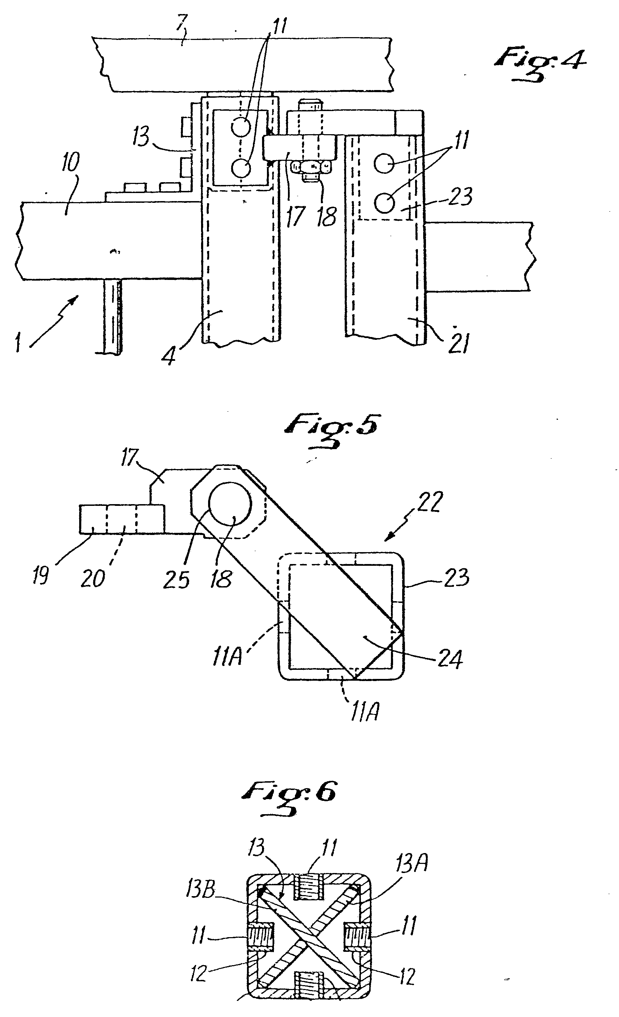

On conserve l'advantage de pouvoir préfabriquer séparément en ateliers les poteaux 4, 6, les parties de paroi 1, 2, la traverse 7, et on obtient néanmoins, aprés montage sur place une ossature de paroi qui a une rigidité propre suffisante que les poteaux 4, 6 ne soient scellés ou ancrés dans le sol que de façon peu importante, part opposition à ce qui est représenté à la figure 3 du brevet français N° 2.392.190 mentionné plus haut.

Selon l'invention, les poteaux 4, 6 qui servent d'encadrement à l'ouverture de passage 5, sont creux, à section droite carrée et ils présentent dans leurs deux parties extrêmes opposées des trous 11 percés à travers leurs quatre faces. Ces trous 11 sont au nombre de deux au moins, alignés dans le milieu de change face. Il est préférable de prévoir des trous alignés identiques dans la zone médiane des poteaux 4, 6. Le rôle des trous 11 est de permettre la fixation facile et rapide des équerres 3. Pour cette raison, comme la paroi des poteaux est mince, des manchons taraudés 12, connus et disponibles dans le commerce, sont fixés dans les trous 11 comme on le voit sur la figure 6.

La traverse 7 est pourvue d'éléments 13 conçus pour être introduits dans les poteaux 4, 6 et fixés grâce aux trous 11. Afin de ne pas gêner la fixation des èquerres 3, il est prévu, selon l'invention, d'employer comme éléments 13 deux plaquettes 13A, 13B (figure 6) se

·traversant et disposées, quand elles sont introduites dans les poteaux 4, 6, dans le sens des diagonales de la section droite de ces poteaux. Ainsi, les trous 11 et leurs manchons taraudés 12 d'une face peuvent servir au vissage de vis qui bloquent les éléments 13 cependant que les trous 11 des autres faces restent libres pour le montage d'equerres 3 associées à des parties de paroi 1, 2 ou pour le montage d'autres pièces comme on le verra plus loin.

L'ossature de l'invention a encore l'advantage de pouvoir être équipée sans difficulté d'une porte coulissante ou d'une porte battante.

Quand il s'agit d'une porte coulissante 14 (figure 2) suspendue à un chemin de roulement de façon conne en soi, la traverse prolongée 7 sert de support de fixation d'un rail 16 grâce à des profilés transversaux 15. Le rail 16 est supporté en plusieurs endroits espacés; il est monté parallèlement à la traverse 7. La longueur de cette dernière est déterminée pour qu'elle porte le rail 16 convenablement sur toute la longueur de la course de la porte coulissante 14.

Quand il s'agit d'une porte battante, celle-ci est montée à l'aide de gonds comprenant une plaque 17 ayant un trou destiné à recevoir un pivot 18 (figure 5). Cette plaque a une patte 19 percée de trous 20 qui correspondent aux trous 11. Ainsi on peut monter et fixer solidement au sommet d'un même poteau 4, sans préparation à faire sur place, une équerre 13, la traverse 7 et la patte 19 (figure 4).

Selon l'invention, les portes battante et pivotante comprennent des montants 21 (figure 2 et figure 4) qui sont des profilés tubulaires creux à section droite carrée et qui sont identiques aux poteaux 4, 6 avec des parties. extrèmes percées de trous 11 à travers leurs quatre faces. Quand il s'agit d'une porte battante, le pivot 18 coopère avec une pièce 22 qui se monte sur la porte (figures 4 et 5). Cette pièce 22 est composée d'un élément carré 23, à faces percé es de trous 11A, apte à être introduit et fixé dans les extrémités des montants 21, grâce aux trous 11 de ceux-ci. Bien entendu les trous 11 et 11A sont en alignement après mise en place des éléments 23 dans les montants 21. Chaque élément carré 23 est pourvu sur sa face extrème d'une plaque 24 qui lui est solidement fixée dans une position à 45°. Cette plaque 24 a un trou 25 destiné à recevoir le pivot 18.

On notera que, grâce aux caractéristiques de l'invention, on peut monter sur place une porte battante d'un côté quelconque des poteaux 4, 6 et des parties de paroi 1, 2 et on peut faire pivoter cette porte vers la gauche ou vers la droite. De plus, une porte étant déjà installée, on peut facilement la démonter l'installer dans un autre sens, sans travail d'usinage ni de perçage à faire sur place.

Quand la porte 14 est coulissante (figure 2) en plus de sa suspension au rail 16, on doit prêvoir le guidage de son extrémité inférieure. Ceci se réalise facilement, selon l'invention, grâce à un profilé en U 26, à ouverture dirigée vers le sol, en position d'utilisation de la porte, que l'on monte contre la face extrème inférieure de cette dernière. Ce montage se failt, selon l'invention, au moyen de deux éléments 23, carrés, à faces percées de trous 11A, qui s'introduisent et se fixent à l'extrémité inférieure des montants 21 de la porte 14, de la même façon que les éléments 23 de la figure 5 sur l'extrémité supérieure des mêmes montants 21. Bien entendu, sur le profilé 26, les éléments 23 sont fixés à la face opposée aux ailes et espacés d'une distance correspondante à celle des montants 21. Un doigt recourbé 27 fixé par une extrémité à la partie inférieure du poteau 4 est engagé entre les ailes du profilé 26 et assure la guidage de la porte coulissante 21.

L'exemple décrite ci-dessus montre bien que l'invention permet l'exécution en ateliers de pièces préfabriquées telles que les parties de paroi 1, 2, les poteaux 4, 6, la traverse allongée 7, les portes battante ou coulissante. Sur place, moyennant un ancrage léger des poteaux 4, 6 dans le sol, on peut réaliser une grande variété de montages sans travaux d'usinage ni de perçage. En particulier, chaque poteau situé à l'extrémité d'un box ou d'une enceinte comme le poteau 6 de la figure 1 peut servir aussi à la fixation, à l'aide d'équerres 13, d'un panneau de séparation disposé transversalement, à partir de la face arrière de ce poteau, sans que ceci gêne le montage de la partie de panneau 2, de la traverse 7 et d'une porte battante ayant ses gonds situés en avant de la face avant du poteau 6.

## Revendications

1. Ossature de paroi avec au moins une ouverture de passage obturable par une porte (14) pour stall ou box de chevaux ou constructions analogues, cette ouverture étant limitée par un premier et un second poteau tubulaire vertical (4, 6) ayant en section droite un profil carré, des trous (11) étant percés dans les parties extrêmes de ces poteaux (4,6) et la partie inférieure de chacun d'eux étant destinée à être vissée à un moyen d'ancrage au sol tandis que la partie supérieure de ces deux poteaux (4,6) est réunie part une traverse supérieure (7) qui s'étend entre ces poteaux (4, 6) et se prolonge au-delà du premier poteau (4) sur une distance au moins égale à la largeur du passage, cette traverse (7) étant pourvue d'éléments aptes à être introduits et immobilisés dans les parties supérieures des poteaux (4, 6), une premiére et une seconde paroi (1, 2) étant vissées par l'intermédiaire d'équerres (3) au moins aux parties extrêmes des poteaux (4, 6) caractériesée en ce que la traverse supérieure (7) est fermement réunie par son extrémité libre (7A) à la partie supérieure (10) de la premiére paroi (1) associée au premier poteau (4), au moins deux trous (11) sont percés dans les quatre faces des poteaux (4,6) et sont munis de manchons taraudés (12) s'étendant à l'intérieur des poteaux (4, 6), les éléments de la traverse (7) aptes à être introduits et immobilisés dans les poteaux étant des plaquettes (13, 13A) se traversant disposées dans le sens des diagonales de la section droite de ces poteaux (4, 6), l'immobilisation des plaquettes (13, 13B), la fixation des équerres (3), des moyens d'ancrage au sol et le cas échéant, des gonds (17, 18) étant assurés par des vis vissées dans les manchons taraudés (12).

2. Ossature selon la revendication 1, caractérisée en ce que la porte comprend des montants (21) de type tubulaire creux à section droite carrée identiques au premier et au second poteaux (4, 6) avec leurs parties extrémes présentant dans leurs quatre faces des trous (11) munis de manchons taraudés (12).

3. Ossature selon la revendication 1 à porte battante selon la revendication 2, caractérisée en ce que les gonds de cette porte comprennent un piéce (22) composée d'un élément carré (23) à faces parcées de trous (11A) apte à être introduit et fixé dans les extremités des montants turbularies crexux (21), de la porte et d'une plaque (24) ayant un trou destiné à cooperer avec un pivot (18), solidement fixée à l'élément carré (23) dans une position à 45°.

4. Ossature selon la revendication 2, à porte coulissante (14), dans laquelle un support superérieur (15) d'un rail de guidage (15) de cette porte est fixé à la traverse supérieure (7) prolongée parallélement à celle-ci, ladite porte étant pourvue sur sa tranche inférieure d'un profilé en U (26) à ouveture dirigée vers le sol en position d'utilisation, caractérisée en ce que ce profilé en U (26) est tenu en place à ses extrémités grâce â des éléments carrés (23) introduits et fixés dans les montants tubulaires creux (21) de la porte, les faces de ces éléments (23) présentant des trous percés (11A) identiques aux trous (11) des poteaux (4,6) et des montants (21) de la porte (14).

## Claims

1. Wall frame having at least one passage opening closable by a door (14) for a horse stall or box or like constructions, this opening being limited by a first and a second vertical tubular post (4, 6) having a square cross section, holes (11) being pierced in the end parts of these posts (4, 6) and the lower part of each of them being adapted to be screwed to a means for anchoring to the ground, whilst the upper part of these two posts (4, 6) is connected by an upper cross piece (7) which extends between these ports (4, 6) and extends beyond the first post (4) over a distance at least equal to the width of the passage, this cross piece (7) being provided with elements adapted to be introduced and immobilised in the upper parts of the posts (4, 6), a first and a second wall (1, 2) being screwed via angle irons (3) at least to the end parts of the posts (4, 6), characterised in that the upper cross piece (7) is firmly connected by its free end (7A) to the upper part (10) of the first wall (1) associated with the first post (4), at least two holes (11) are pierced in the four faces of the posts (4, 6) and are provided with tapped sleeves (12) extending inside the posts (4, 6), the elements of the cross piece (7) adapted to be introduced and immobilised in the posts being traversing plates (13, 13A) disposed diagonally with respect to the cross section of these posts (4, 6), the immobilisation of the plates (13, 13B), the fixing of the angle irons (3), the means for anchoring to the ground and, if necessary, the hinge pins (17, 18) being ensured by screws screwed in the tapped sleeves (12).

2. Frame according to Claim 1, characterised in that the door comprises uprights (21) of hollow tubular type, of square cross section, identical to the first and to the second post (4, 6) with their end parts presenting in their four faces holes (11) provided with tapped sleeves (12).

3. Frame according to Claim 1 with swing door according to Claim 2, characterised in that the hinge pins of this door comprise a piece (22) composed of a square element (23) with faces pierced with holes (11A) adapted to be introduced and fixed in the ends of the hollow tubular uprights (21) of the door and of a plate (24) having a hole adapted to cooperate with a pivot (18), solidly fixed to the square element (23) in a position at 45°.

4. Frame according to Claim 2, with sliding door (14), in which an upper support (15) for a guide rail (16) of this door is fixed to the upper cross piece (7) extended parallel thereto, said door being provided on its lower edge with a U-section (26) whose opening is directed towards the ground in position of use, characterised in that this U-section (26) is held in place at its end due to square elements (23) introduced and fixed in the hollow tubular uprights (21) of the door, the faces of these elements (23) presenting pierced holes (11A) identical to the holes (11) of the posts (4, 6) and the uprights (21) of the door (14).

## Patentansprüche

1. Aus einzelnen Wandteilen (1, 2) zusammengesetzte Umfriedung, insbesondere Pferdestall oder -box mit mindestens einer durch eine Tür (14) verschließbaren Durchgangsöffnung (5), wobei die Durchgangsöffnung (5) durch einen ersten und einen zweiten rohrartigen, vertikalen Pfosten (4, 6) mit Vierkantquerschnitt begrenzt ist und die Pfosten (4, 6) mindestens an ihren Enden Löcher (11) aufweisen und daß vorgesehen ist, die beiden Pfosten (4, 6) an ihrem unteren Bereich über Verankerungsmittel mit dem Boden zu verbinden, während der obere Teil der beiden Pfosten (4, 6) durch eine obere Traverse (7) miteinander verbunden sind, wobei die Traverse (7) sich zwischen den beiden Pfosten (4, 6) erstreckt und über den ersten Pfosten (4) mindestens um die Durchgangsöffnungsbreite hinaus erstreckt, und daß die Traverse (7) Aufnahmeelemente (13) aufweist, die in die oberen Enden der Pfosten (4, 6) hineinragend befestigbar sind und daß mindestens ein erster Wandteil (1) und ein zweiter Wandteil (2) vorgesehen ist, die über Winkel (3) mindestens an den Enden der Pfosten (4, 6) verschraubt sind, dadurch gekennzeichnet, daß die obere Traverse (7) mit ihrem Ende (7A) mit dem oberen Teil des Wandteils (1) fest verbunden ist, daß ferner am ersten Pfosten (4) mindestens zwei Löcher (11) auf den vier Pfostenseiten vorgesehen sind, die mit in das Pfosteninnere ragenden Gewindemuffen (12) versehen sind, daß die Aufnahmeelemente (13) der Traverse (7) in das Pfosteninnere hineinragen und dort befestigt sind und dazu Platten (13, 13A, 13B) vorgesehen sind, die diagonal im Rechteckquerschnitt der Pfosten (4, 6) in diesen verlaufen, und daß die Befestigung der Platten (13, 13A, 13B), die Befestigung der Winkel (3), die Verankerungsmittel der Pfosten (4, 6, 6') am Boden und gegebenenfalls von Türangeln (17, 18) durch in die Gewindemuffen (12) eingeschraubte Schrauben erfolgt.

2. Umfriedung nach Anspruch 1, dadurch gekennzeichnet, daß die Tür (14) senkrechte Stäbe (21) mit Rechteckquerschnitt aufweist identisch dem ersten und zweiten Pfosten (4, 6), und daß sie an ihren Enden an ihren vier Seitenflächen mit Löchern (11) und Gewindemuffen (12) versehen sind.

3. Unfriedung nach Anspruch 1 mit einer Schwingtür nach Anspruch 2, dadurch gekennzeichnet, daß die Türangeln dieser Tür einen Teil (22) mit einem rechteckigen Element (23) aufweisen, das mit Löchern (11A) versehen ist und das in die Enden der senkrechten Stäbe (21) der Tür (14) eingeführt und befestigt ist und einer Platte (24), die mit einem Loch (25) für einen Bolzen (18) versehen ist und die fest unter einem Winkel von 45° mit dem rechteckigen Element (23) verbunden ist.

4. Umfriedung nach Anspruch 2 mit einer Schiebetür (14) bei der ein oberer Träger (15) mit einer Führungsschiene (16) der Tür (14) an der oberen Traverse (17) parallel zu dieser befestigt ist, wobei die Tür (14) unten ein nach unten gegen den Boden offenes U-Profil (26) aufweist, dadurch gekennzeichnet, daß das U-Profil (26) entsprechend den rechteckigen Elementen (23) in den senkrechten Stäben (21) der Tür (14) eingeführt und befestigt ist, und daß die Seitenflächen der Elemente (23) den Löchern (11) der Pfosten (4, 6) und der senkrechten Stäbe (21) der Tür (14) entsprechende Löcher (11A) aufweisen.

*Fig.1*

*Fig.2*

*Fig.3*

0010042

0010042

*Fig.4*

7  11
13
10
17  18
23
1
4
21

*Fig:5*

17
22
19  20  25  18
23
11A
24
11A

*Fig:6*

13  11
13B  13A
11  11
12  12

2